# EUROPÄISCHE PATENTSCHRIFT

(11) **EP 2 653 036 B1**
(45) Veröffentlichungstag und Bekanntmachung des Hinweises auf die Patenterteilung: **03.04.2019**
(21) Anmeldenummer: 12164615.2
(22) Anmeldetag: 18.04.2012
(51) Int. Cl.: A22C 15/00, B65G 35/06, A22C 11/00, B65G 47/61, B65G 54/02, B65G 65/00

(54) **Verfahren und Vorrichtung zum Aufhängen von Würsten**
Device and method for suspending sausages
Procédé et dispositif de suspension de saucisses

(43) Veröffentlichungstag der Anmeldung: 23.10.2013
(73) Patentinhaber: Albert Handtmann Maschinenfabrik GmbH & Co. KG, 88400 Biberach (DE)
(72) Erfinder: Bächtle, Manfred, 88433 Schemmerhofen (DE)
(74) Vertreter: Grünecker Patent- und Rechtsanwälte PartG mbB

(56) Entgegenhaltungen:
- EP-A1- 0 422 330
- WO-A1-00/25592
- US-A1- 2010 243 409

## Beschreibung

Die Erfindung betrifft ein Verfahren und eine Vorrichtung zum Aufhängen von Würsten gemäß den Oberbegriffen der Ansprüche 1 und 8.

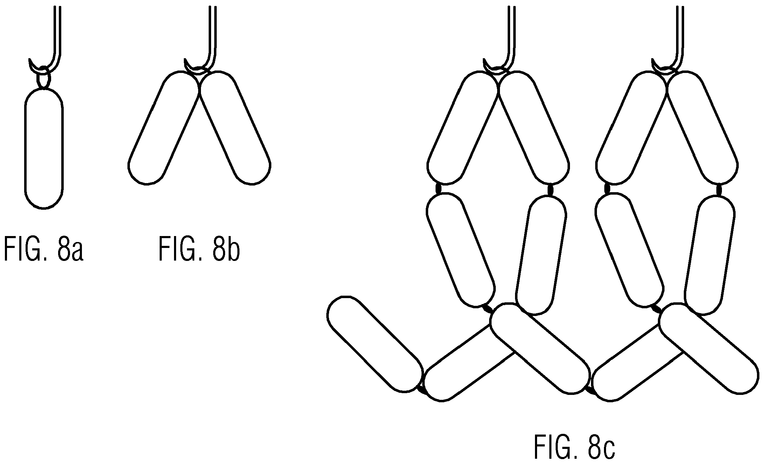

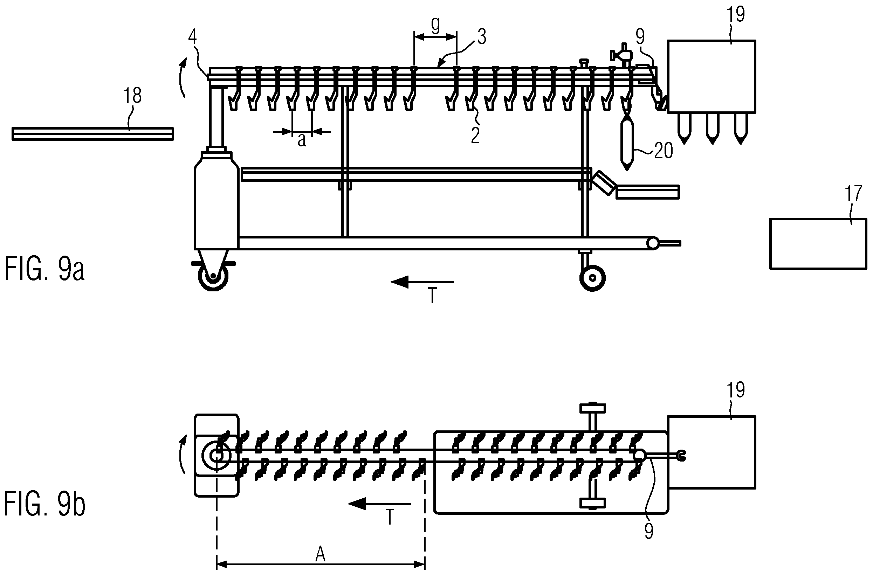

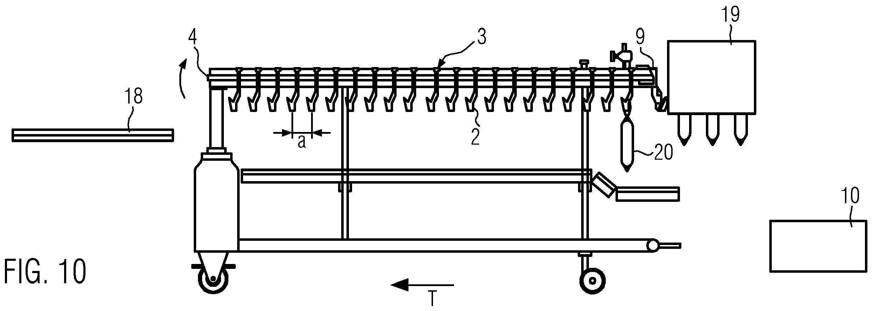

Bei der Würstchenproduktion werden die Produkte z.B. als zusammenhängende Kette (Einzelwürste in Reihe, die an der Abdrehstelle miteinander verbunden sind) hergestellt, wobei im Anschluss an das Füllen und Abdrehen die Wurstketten an eine Aufhängevorrichtung übergeben werden. Dort werden sie von Aufhängehaken in Schleifenform aufgenommen (siehe z.B. Fig. 8c). Es ist jedoch auch möglich, an den einzelnen Wurstportionen mit einem Schlaufenleger eine Schlaufe zu legen, über die eine oder mehrere Würste dann an Aufhängehaken eines Hängers aufgehängt werden (Fig. 8a). Schließlich ist es auch möglich, zwei oder mehrere Würste an einer Abteilstelle zwischen zwei Portionen am Haken aufzuhängen (Fig. 8b). Die Aufhängehaken sind auf der Aufhängevorrichtung umlaufend montiert, wie insbesondere aus den Figuren 9 und 10 hervorgeht. Die Abstände der Aufhängehaken sind mechanisch verstellbar, entweder in Stufen (z.B. in einem 5 mm-Raster) oder aber auch stufenlos und somit an unterschiedliche Anforderungen anpassbar, wie Durchmesser der Würste, Anzahl der Würste pro Rauchstock etc. Die Würste werden mit den Aufhängehaken in einen oder mehrere Abnahmebereiche transportiert, wobei die Würste dann z.B. von einem Rauchstock abgenommen werden (vgl. z. B. US 2010/243409 A1 und EP 0 422 330 A1).

Es gibt unterschiedliche Bestückungsvarianten der Aufhängevorrichtung mit Haken. Beispielsweise kann die verwendete Wursthülle in ihrer Länge so abgestimmt sein, dass die produzierte Wurstkette gerade auf einen Rauchstock passt. Dann ist es auch sinnvoll, die Aufhängevorrichtung in Gruppen zu bestücken, wobei eine Gruppe die Anzahl an Haken aufweist, die in etwa einer Rauchstocklänge entspricht, z.B. 4 Gruppen mit je 20 Haken. Die Figuren 9a und b zeigen vereinfacht 4 Gruppen mit je 10 Haken.

Werden Wursthüllen verwendet, deren Länge nicht auf die Rauchstocklänge abgestimmt ist, ist die Aufhängevorrichtung in der Regel über die gesamte Länge gleichmäßig mit Haken bestückt. Diese Art der Bestückung findet vor allem bei der Naturdarmverarbeitung Anwendung. Hier ist die Aufhängevorrichtung komplett bestückt und alle Haken haben in der Regel den gleichen Abstand zueinander, wie insbesondere auch in der Figur 10 dargestellt wird.

Vor dem Entnehmen der Wurstschleifen muss der Bediener den Strang nun an der richtigen Stelle auftrennen und die Enden eventuell verschließen (verknoten, klippen, verschweißen). Die richtige Stelle hierfür schnell zu finden, kann Schwierigkeiten bereiten, ebenso der vorgegebene Abstand zwischen den Haken. Bei der Produktion kann hier zur Hilfestellung ein Haken die Übernahmeposition überfahren, d.h. nicht behängt werden, so dass eine Leerstelle entsteht. Alternativ werden auch Haken mit unterschiedlichen Farben eingesetzt, um das Gruppenende zu kennzeichnen. Beide Hilfestellungen sind jedoch insofern nachteilig, dass sie nicht flexibel sind.

Beim Abfüllen von Produkten mit anderem Kaliber kommt es vor, dass die Abstände der einzelnen Aufhängehaken zueinander verstellt werden müssen. Hierzu ist ein entsprechend aufwändiger Umrüstprozess erforderlich. Das bedeutet, dass zumindest teilweise Aufhängehaken entnommen werden und mit dem gewünschten Abstand am Hakentransportelement platziert werden müssen. Das Hakentransportelement (Zahnriemen oder Kette) der Aufhängeeinheit hat einen festen Umfang (z.B. 4.000 mm). Sollen beispielsweise 120 Haken in jeweils gleichem Abstand platziert werden, so würde der Abstand 33,33 mm betragen. Wird ein Abstand von 40 mm benötigt, so sind zuerst 20 Haken zu entnehmen, dann kann der Abstand eingestellt werden. Diese Umbau- und Einstellarbeiten sind sehr zeitintensiv.

Sämtlichen bisher am Markt befindlichen Aufhängevorrichtungen fehlt somit die Möglichkeit, dass diese schnell und einfach auf andere Anforderungen umgestellt werden können.

Hiervon ausgehend liegt der vorliegenden Erfindung die Aufgabe zugrunde, ein Verfahren zum Aufhängen von Würsten bzw. eine Aufhängevorrichtung bereitzustellen, die ermöglichen, dass die Abstände der Aufhängehaken auf einfache Art und Weise individuell eingestellt werden können.

Erfindungsgemäß wird diese Aufgabe durch die Merkmale der Ansprüche 1 und 8 gelöst.

Gemäß der vorliegenden Erfindung wird zumindest ein Teil der Aufhängehaken unabhängig voneinander von einer Steuerung angesteuert werden. Somit können die Aufhängehaken einzeln und individuell unabhängig von den restlichen Aufhängehaken angetrieben werden. Es wird eine vorher definierte Anzahl an Aufhängehaken angeordnet, wobei dann durch die individuelle Bewegung der Aufhängehaken zueinander die gewünschten Abstände der Aufhängehaken eingestellt werden können, ohne dass eine aufwändige Umbestückung vorgenommen werden muss. Die Aufhängehaken müssen somit nicht mehr definiert gleichmäßig am Umfang der Vorrichtung verteilt sein, wie bei den bisher sich am Markt befindlichen Aufhängeeinheiten. Vorteilhafterweise sind alle Aufhängehaken unabhängig voneinander ansteuerbar bzw. antreibbar, dies ermöglicht eine maximale Flexibilität - es ist jedoch auch bereits vorteilhaft, wenn einige der Aufhängehaken unabhängig antreibbar sind, wenn z.B. die Aufhängehaken einer Hakengruppen unabhängig von anderen Hakengruppen antreibbar sind.

Die Aufhängehaken werden somit unabhängig mit einem jeweils entsprechenden Antrieb angetrieben.

Vorteilhafterweise werden die Aufhängehaken auf einer im Wesentlichen horizontalen geschlossenen Umlaufbahn geführt. Gemäß de Erfindung wird die Geschwindigkeit eines Aufhängehakens während eines Umlaufs variiert, wobei hier eine Variation der Bewegungsgeschwindigkeit (zusätzlich zum Stillstand) der Aufhängehaken gemeint ist. Somit kann beispielsweise die Geschwindigkeit des Aufhängehakens an die verschiedenen Prozessschritte wie die Aufnahme der Würste auf die Haken, Weitertransport, Abnahme der Würste durch einen Rauchstock und Rückführen zur Übergabeposition ideal angepasst werden. Durch die Verzögerung eines oder mehrerer Aufhängehaken bei der Abnahme wird der gesamte Prozess nicht verzögert, da die Aufhängehaken in Abschnitten nach der Aufnahme entsprechend schneller bewegt werden können.

Vorteilhafterweise werden die Abstände zwischen nachfolgenden Aufhängehaken auf vorbestimmte Abstände eingestellt, wobei die Abstände entweder konstant sind oder positions- und zeitabhängig sind. Das heißt, dass die vorliegende Erfindung ermöglicht, dass die Haken vorbestimmte durchwegs konstante Abstände zueinander aufweisen oder aber an verschiedenen Stellen oder Bereichen auf der Umlaufbahn unterschiedliche Abstände zueinander aufweisen. Diese Abstände können auch in Abhängigkeit der Zeit variiert werden. Dabei können beispielsweise die Abstände zwischen nachfolgenden Aufhängehaken mit Hilfe einer Positionserkennung eingestellt werden oder aber vorbestimmte Aufhängehaken (bei bekannten Startpunkt) durch Einstellen der Geschwindigkeit zu bestimmten Zeiten auf gewünschte Positionen gefahren werden.

Die Abstände zwischen den Haken können derart eingestellt werden, dass es eine bestimmte Anzahl k an Gruppen gibt, die eine bestimmte Anzahl n an Aufhängehaken umfassen, wobei der Abstand a zwischen den Aufhängehaken in einer Gruppe kleiner ist als der Abstand g zwischen zwei Gruppen. Somit können die Wurstschlaufen sehr einfach durch einen Rauchstock abgenommen werden.

Es ist dann möglich, dass während des Transports der Aufhängehaken die Abstände der Aufhängehaken innerhalb einer Gruppe variiert werden und/oder auch der Abstand zwischen zwei Gruppen eingestellt bzw. variiert wird. Beim Verändern der Hakenabstände innerhalb einer Gruppe ergibt sich der Vorteil, dass der Abstand zwischen zwei benachbarten Haken vergrößert werden kann, um das Produkt einfach auf den Haken aufzunehmen. Sobald die komplette Anzahl n an Aufhängehaken einer Gruppe behängt ist, können die Haken innerhalb einer Gruppe dann so weit zusammengefahren werden, dass sich die Produkte gerade nicht berühren. Somit werden die Rauchstöcke optimal befüllt und damit können auch die Anlagenteile für die nachfolgenden Prozessschritte, z.B. die Rauchkammern, ebenfalls optimal befüllt werden.

Bei einer Endlosbestückung können die Abstände von Gruppen zwischen den beiden Haken, die z.B. das Ende der ersten und den Anfang der zweiten Gruppe tragen, eingestellt bzw. variiert werden. Zum einen hilft das dem Bediener beim Erkennen dieser Trennstelle, andererseits kann dem Bedienpersonal zusätzlich Freiraum geschaffen werden, um den Trennvorgang besser durchführen zu können (falls der Wursthüllenstrang über ein Gruppenende hinausgeht).

Auch kann eine Gruppe unabhängig von einer zweiten Gruppe auf der Umlaufbahn bewegt werden. Bei der Entnahme der Produkte einer Gruppe von den Haken, kann somit für einen bestimmten Zeitraum die Geschwindigkeit reduziert oder gestoppt werden, um den Rauchstock (manuell oder automatisch) zuzuführen. Somit entsteht eine Puffermöglichkeit, die die Entnahme einer Wurstgruppe unabhängig von der Aufhängefunktion zulässt. Darüber hinaus ist es jetzt möglich, die unterschiedlichen Gruppen in unterschiedlichen Aufnahmebereichen zu unterschiedlichen Zeitpunkten zu entnehmen, was im Stand der Technik nicht möglich war, da beim Stillstand einer Gruppe ja jeweils die anderen Gruppen auch gestoppt wurden. Somit ist gemäß der vorliegenden Erfindung ein verbesserter Produktionsablauf möglich. Es ist ganz besonders vorteilhaft, wenn, wie bereits beschrieben, der Abstand zwischen zwei benachbarten Aufhängehaken derart gesteuert wird, dass der Abstand bei der Aufnahme der Würste größer ist als in einem Abnahmebereich beim Abnehmen der Würste und/oder die Aufhängehaken bei der Aufnahme der Würste langsamer bewegt werden als in einem in Transportrichtung nachfolgenden Bereich. Somit ist eine sichere Aufnahme der Würste bei gleichzeitig optimaler Befüllung des Rauchstocks möglich.

Die erfindungsgemäße Vorrichtung weist mehrere auf einer Umlaufbahn umlaufende Aufhängehaken zur Aufnahme von Würsten auf, wobei zumindest ein Teil der Aufhängehaken unabhängig voneinander von einer Steuerung ansteuerbar ist.

Dabei ist zumindest ein Teil der Aufhängehaken mit einem separaten Antrieb versehen. Dieser separate Antrieb kann wie folgt realisiert werden: Die Aufhängehaken können dabei einen eigenen Motor aufweisen oder über ein jeweils eigenes umlaufendes Antriebselement, wie beispielsweise einen umlaufenden Riemen oder eine umlaufende Kette, angetrieben werden. Es ist auch möglich, dass die Haken durch Linearmotoren unabhängig voneinander angetrieben werden.

Zusätzlich zu dem Antrieb weist die Vorrichtung dann noch eine Führungseinrichtung auf, mit der die Haken auf der Umlaufbahn geführt werden. Die Aufhängehaken sind in der Führungseinrichtung frei beweglich.

Die Aufhängevorrichtung umfasst weiter eine Steuerung, die derart ausgebildet ist, dass die Aufhängehaken bestimmte Abstände zueinander aufweisen, wobei die vorbestimmten Abstände konstant sind oder von der Position und/oder der Zeit abhängig sind. Vorteilhafterweise ist die Steuerung derart ausgelegt, dass die Aufhängehaken mit variierender Geschwindigkeit während eines Umlaufs bewegbar sind.

Gemäß einer bevorzugten Ausführungsform umfasst die Vorrichtung ein Positionserkennungssystem, das die Position einzelner Aufhängehaken erfasst, wobei die Steuerung derart ausgebildet ist, dass die Aufhängehaken in Abhängigkeit der Position angesteuert werden. Die Verwendung eines Positionserkennungssystems erlaubt ein besonders flexibles Verfahren und ist insbesondere auch besonders für die Anwendung von Linearmotoren geeignet.

Nachfolgend wird die vorliegende Erfindung unter Bezugnahme der folgenden Figuren näher erläutert.
- Fig. 1: zeigt in perspektivischer Darstellung grob schematisch eine Ausführungsform gemäß der vorliegenden Erfindung.
- Fig. 2: zeigt eine grob schematische perspektivische Darstellung einer Ausführungsform der vorliegenden Erfindung mit Einzelantrieben an den Haken.
- Fig. 3: zeigt eine grob schematische perspektivische Darstellung einer weiteren Ausführungsform mit Linearmotor.
- Fig. 4: zeigt eine grob schematische perspektivische Darstellung einer Ausführungsform der vorliegenden Erfindung mit einzelnen umlaufenden Antriebselementen.
- Fig. 5: zeigt schematisch ein Steuerprinzip gemäß der vorliegenden Erfindung.
- Fig. 6: zeigt grob schematisch eine Aufsicht auf ein Ausführungsbeispiel der vorliegenden Erfindung mit mehreren Gruppen.
- Fig. 7: zeigt grob schematisch eine Aufsicht auf ein Ausführungsbeispiel gemäß der vorliegenden Erfindung mit Aufhängehaken mit variierendem Abstand.
- Fig. 8a, b, c: zeigen mögliche Ausführungsformen der Wurstaufhängung.
- Fig. 9a: zeigt eine Aufhängevorrichtung mit mehreren Gruppen Stand der Technik.
- Fig. 9b: zeigt eine Aufsicht auf die in Fig. 9a gezeigte Aufhängevorrichtung.
- Fig. 10: zeigt eine Seitenansicht einer Aufhängevorrichtung gemäß dem Stand der Technik mit gleichmäßiger Bestückung über die Riemenlänge.

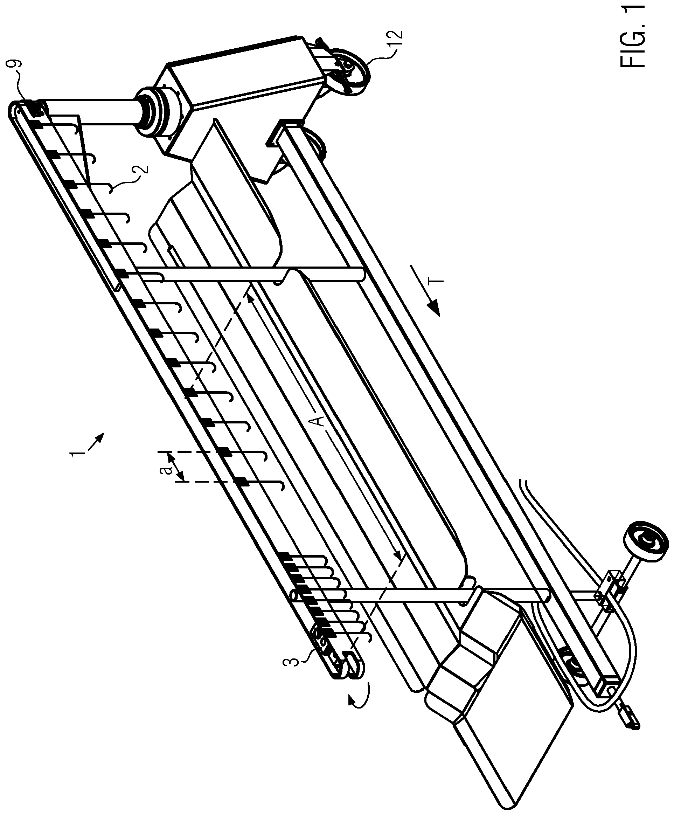

Fig. 1 zeigt in perspektivischer Darstellung grob schematisch eine Aufhängevorrichtung 1 gemäß der vorliegenden Erfindung.

Die Aufhängevorrichtung weist mehrere auf einer geschlossenen Umlaufbahn 3 umlaufende Haken 2 auf. Die Haken sind vorzugsweise parallel zueinander angeordnet und die Umlaufbahn läuft im Wesentlichen horizontal.

Die Aufhängehaken 2 dienen dazu, Würste bzw. Wurstschlaufen im Bereich einer Übergabeposition 9 aufzunehmen und in Transportrichtung T, d.h. in Umlaufrichtung der Haken, in einen vorgesehenen Abnahmebereich A zu transportieren. Der Abnahmebereich ist der Bereich, in dem die Aufhängehaken A zur Abnahme der Würste, beispielsweise durch einen Rauchstock, angeordnet sind. Die Würste hängen dabei in Wurstschleifen über den Haken. Dabei kann unter Wurstschleife entweder eine Schlaufe 21, die an einer Wurst oder mehreren Würsten von einem Schlaufenleger angebracht wurde, verstanden werden, siehe Fig. 8a, oder aber Schlaufen, die durch in Schleifenform vorliegenden Wurstketten gebildet sind (Einzelwürste in Reihe, verbunden zueinander an Abdrehstellen). Es ist auch möglich, dass mindestens zwei Würste 20 an ihrer Abteil- bzw. Abdrehstelle auf dem Haken 2 aufgenommen sind.

Im vorderen Bereich der Aufhängevorrichtung fädelt ein Aufhängehaken 2 an der Übergabeposition 9 in die Wurstschleife ein, die von einer Transporteinrichtung 19 mit einer Übergabeeinrichtung antransportiert wird (in Fig. 1 nicht dargestellt, siehe z.B. Fig. 9a) zieht diese ab und transportiert sie weiter. Entsprechende Übergabe- und Transporteinrichtungen sind bekannt und werden hier deshalb nicht näher erläutert. Die in Fig. 1 gezeigte Aufhängevorrichtung weist Räder 12 auf und ist somit beweglich und kann mit ihrem Vorderende exakt in eine Aufnahmeposition 9 verfahren werden.

Gemäß der Erfindung sind die Aufhängehaken 2 einzeln und individuell ansteuer- und antreibbar. Dadurch ist es möglich, ohne Umrüsten flexible Abstände a der Haken 2 zueinander einzustellen.

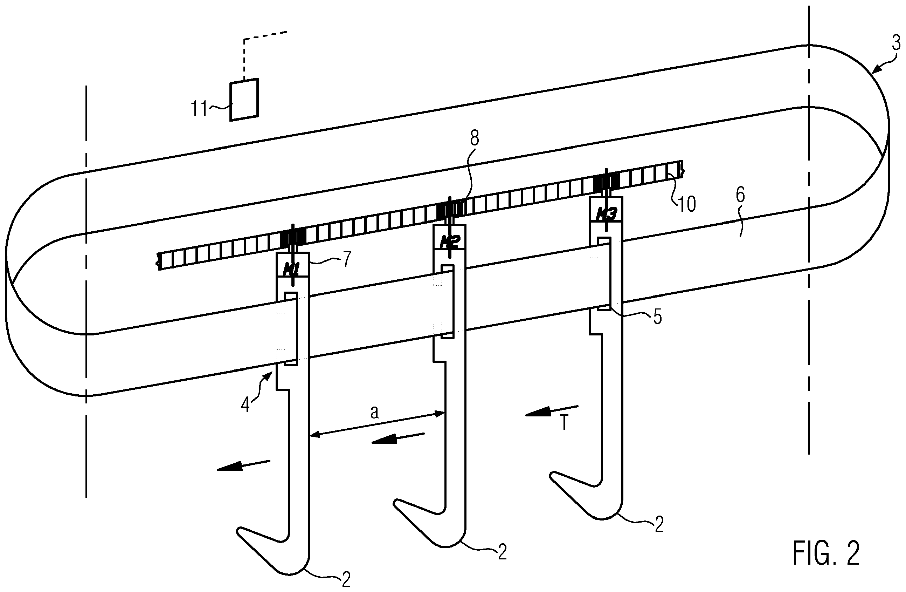

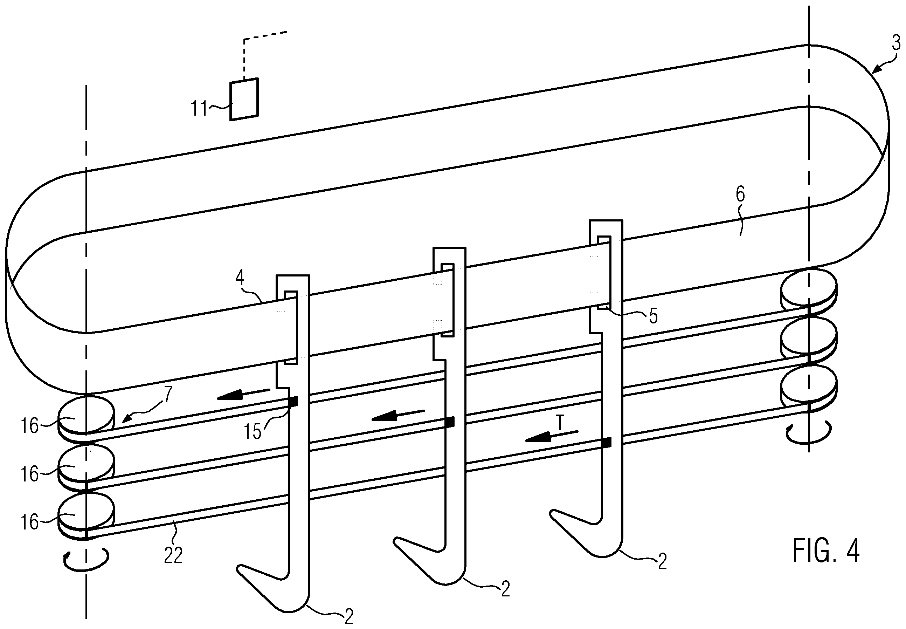

Das unabhängige Ansteuern bzw. Antreiben der Aufhängehaken kann, wie nachfolgend näher erläutert wird, entweder dadurch gelöst werden, dass die Haken eigene Antriebe in Form von jeweiligen Antriebselektromotoren M1, M2, M3 oder angetriebenen Antriebsriemen oder -ketten 22 aufweisen, siehe Fig. 2 und 4, oder aber separate Linearmotorantriebe, wobei an der Laufbahn der Aufhängehaken 2 entlang umlaufend Linearmotoren 7, 14 verwendet werden.

Bei der im Zusammenhang mit Fig. 2 gezeigten Ausführungsform weist die Vorrichtung z.B. eine Führung 4 auf, wobei die Haken 2 in Transportrichtung T frei beweglich an einer umlaufenden Führungsschiene angeordnet sind. In Fig. 2 weist dazu der Haken beispielsweise eine Aussparung 5 auf, durch die sich die Führungsschiene 6 erstreckt. Die Aufhängehaken 2 weisen jeweils einen eigenen Motor 7 auf, der die Haken 2 antreibt. Der Motor 7 kann die Haken beispielsweise über ein Zahnrad 8 und eine Zahnstange 10 in Transportrichtung T bewegen. Die Zahnstange ist hier vereinfacht dargestellt und ist entsprechend der Umlaufbahn bzw. der Führungsschiene geformt, derart, dass sich die Haken 2 umlaufend bewegen können. Einfachheitshalber sind hier nur drei Haken 2 dargestellt. Die Energieversorgung der Motoren kann über einen nicht extra dargestellten Schleifkontakt erfolgen. Die Ansteuerung der einzelnen Motoren erfolgt ebenfalls über Schleifkontakt oder beispielsweise über Funksignale etc. Die Steuerung kann die Motoren 7 entsprechend einem vorab fest eingespeicherten Programm mit bestimmtem Programmablauf antreiben, wodurch über die Relativbewegung der Haken 2 zueinander bestimmte Abstände a zwischen den Aufhängehaken 2 automatisch eingestellt werden können. Dabei können die Abstände a,g entweder konstant sein oder aber nicht konstant, wobei der Abstand von der Position benachbarter Aufhängehaken an der Umlaufbahn abhängt.

Es ist jedoch auch möglich, ein Positionserkennungssystem 11 zu verwenden, wobei die exakte Position einzelner Haken 2 bestimmt werden kann. Für diese Ausführungsform eignet sich als Positionserkennungssystem beispielsweise ein optischer Sensor.

Der Sensor 11 kann, wie grob schematisch angedeutet, an einer Stelle angeordnet sein, wobei dann über die Geschwindigkeit und Referenzposition der jeweilige Ort der Haken ermittelt werden kann. Vorzugsweise wird aber ein Linearmesssystem verwendet, wobei eine Sensoreinrichtung entlang der Umlaufbahn der Haken angeordnet ist. Um die Position der einzelnen Haken zu erkennen, können diese entsprechend gekennzeichnet bzw. codiert sein.

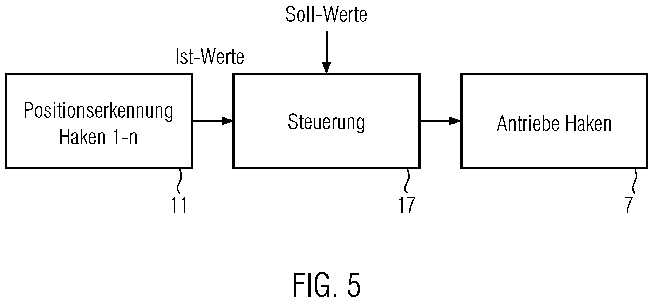

Wie aus der Fig. 5 hervorgeht, können in die Steuerung 17 über eine nicht extra dargestellte Eingabeeinrichtung Parameter z.B. Sollwerte für den Abstand a zwischen nachfolgenden Aufhängehaken insbesondere für bestimmte Bereiche auf der Umlaufbahn und/oder für bestimmte Zeitpunkte eingegeben werden (wobei der Zeitpunkt ein Zeitpunkt ist an dem sich ein mit bekannter Geschwindigkeit angetriebener Aufhängehaken befindet nachdem er zu einem Referenzzeitpunkt eine bestimmte Stelle passiert hat - dieser Zeitpunkt entspricht dann einer bestimmten Position).

Die Positionserkennung 11 erkennt die Position der jeweiligen Haken 1 bis n (n E IN) und sendet die Positionswerte an die Steuerung 17. Die Steuerung 17 vergleicht dann z.B. Ist- und Sollwert und schickt Steuersignale an die einzelnen Hakenantriebe 7, die dann die Haken 2 in die korrekte Position bringen.

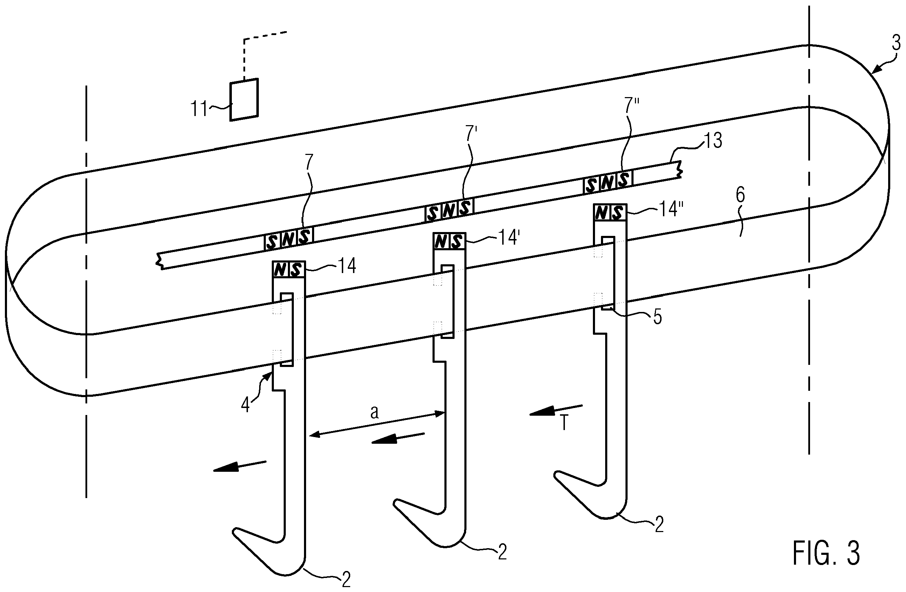

Fig. 3 zeigt eine weitere mögliche Ausführungsform gemäß der vorliegenden Erfindung. Auch hier sind einfachheitshalber nur drei Haken 2 gezeigt. Dieses Ausführungsbeispiel entspricht dem in Fig. 2 gezeigten Ausführungsbeispiel, wobei hier jedoch anstatt der einzelnen Motoren Linearmotoren 7, 7', 7" verwendet werden, die beabstandet an der gesamten Laufbahn der Haken 2 angeordnet sind. (Einfachheitshalber sind hier nur drei Linearmotoren gezeigt). Die Aufhängehaken 2 sind als Läufer der Linearmotoren 7, 7', 7" mit Permanentmagneten 14, 14', 14" versehen, wobei die Magnetausrichtung bei allen Aufhängehaken gleich ist, hier z.B. Nordpol vorne. Die Permanentmagneten 14 und ein entsprechender Linearmotor stellen dann zusammen einen Antrieb dar. Die Position jedes einzelnen Aufhängehakens auf der Umlaufbahn wird der Steuerung 17 mittels eines Positionserkennungssystems 11 übermittelt. Als Positionserkennungssystem eignet sich beispielsweise ein optisches oder magnetisches Positionserkennungssystem, insbesondere ein integriertes absolutes Multipositionssystem, mit dessen Hilfe sich zu jedem Zeitpunkt die genaue Position eines jeden Hakens ermitteln lässt.

Vorzugsweise wird hier auch ein Linearmesssystem verwendet, wobei die Sensoreinrichtung sich entlang der Umlaufbahn der Haken erstreckt, um die genaue Position der Haken zu ermitteln. Auch hier sind die einzelnen Haken entsprechend gekennzeichnet bzw. codiert, um deren exakte Position zu ermitteln.

Wie auch bereits im Zusammenhang mit Fig. 2 erläutert wurde, werden die Positionssignale an die Steuerung 17 geleitet und mit entsprechenden Sollwerten verglichen. Daraus resultierend werden die umlaufend angeordneten Linearmotoren 7, 7', 7" angesteuert, so dass z.B. der Elektromagnet vor dem Haken 2 als Südpol den Nordpol des Hakens anzieht, während der Südpol des Hakens gleichzeitig vom Südpol des dahinterliegenden Statorsüdpols abgestoßen wird. Die Teilung der Magnete auf dem Haken muss sich von der Teilung der Statormagnete unterscheiden. Die durch diese Magnetkräfte bewirkte Bewegung des Hakens wird wiederum vom Positionserkennungssystem 11 erkannt und entsprechend werden die in Transportrichtung nachfolgenden Linearmotoren angesteuert. Das bedeutet, dass je nach Position eines bestimmten Hakens die Spulen der Linearmotoren 7, 7', 7" mit entsprechenden Stromsollwerten angesteuert werden. Somit kann, wie zuvor beschrieben, durch die Relativbewegung nachfolgender Haken zueinander der Abstand a, g zwischen nachfolgenden Haken eingestellt werden.

Gemäß einer weiteren möglichen Ausführungsform werden die einzelnen Haken 2, wie in Fig. 4 dargestellt ist, über eigene umlaufende Antriebsriemen 22 angetrieben. Das in Fig. 4 gezeigte Ausführungsbeispiel entspricht ansonsten den in Fig. 2 und 3 gezeigten Ausführungsbeispielen. Die Riemen 22 werden über Antriebsrollen 16 umlaufend angetrieben und sind über eine Kopplung 15 jeweils mit einem Haken verbunden. Somit können die einzelnen Haken 2 ebenfalls unabhängig voneinander angetrieben bzw. angesteuert werden. Auch hier kann das im Zusammenhang mit Fig. 2 und 3 gezeigte Positionserkennungssystem verwendet werden.

Nachfolgend werden mehrere Ausführungsmöglichkeiten des erfindungsgemäßen Verfahrens näher erläutert.

Bei dem erfindungsgemäßen Verfahren ist die Vorrichtung mit einer bestimmten Anzahl n von Aufhängehaken 2 bestückt. Für eine bestimmte Anwendung, d.h. beispielsweise für ein bestimmtes Wurstkaliber, sowie eine bestimmte Länge eines Rauchstocks 18 werden vor dem eigentlichen Prozess entsprechende Parameter in die Steuerung 17 als Sollwerte eingegeben. Dabei wird beispielsweise der Abstand a,g (oder entsprechende Werte wie Wurstkaliber und Rauchstocklänge) zwischen zwei nachfolgenden Haken 2 eingegeben. Es können auch positions- und/oder zeitabhängige Abstände a, g eingegeben werden. Auch können beispielsweise bestimmte Geschwindigkeiten für die Haken in bestimmten Bereichen bzw. an bestimmten Stellen eingegeben werden.

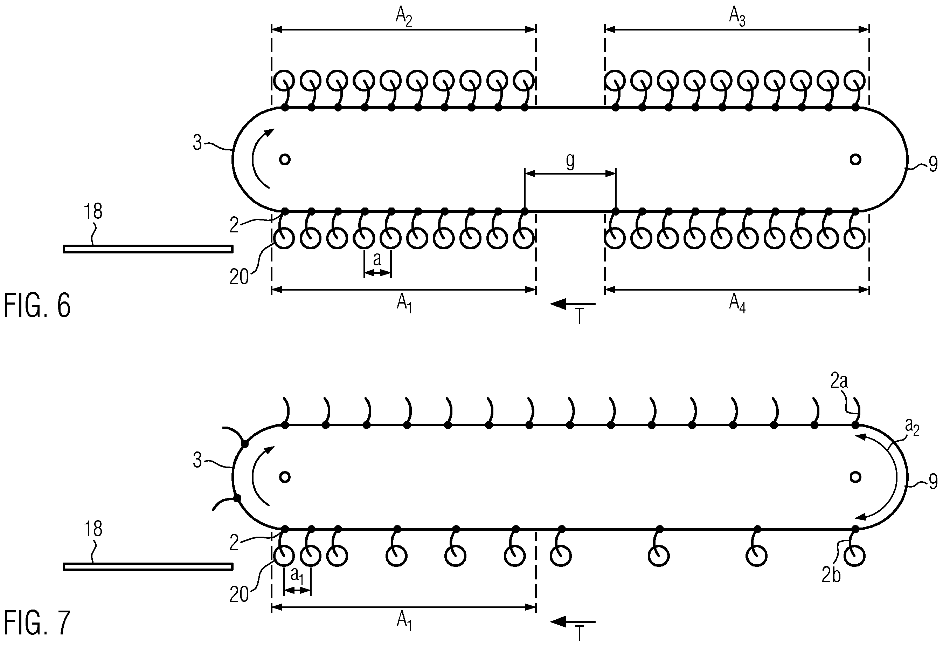

Wie in Fig. 6 dargestellt, ist es möglich, die Abstände zwischen den Haken derart einzustellen, dass es eine bestimmte Anzahl k (in Fig. 6 vier Stück) an Gruppen gibt (k E IN), die eine bestimmte Anzahl n an Aufhängehaken 2 umfassen. Die einzelnen Gruppen weisen dabei einen Abstand g zueinander auf, d.h. der letzte Haken einer vorauseilenden Gruppe weist einen Abstand g zum ersten Haken einer nachfolgenden Gruppe auf. Die Aufhängeeinrichtung 1 kann dabei auch mehrere Abnahmebereiche A1, A2, A3, A4 aufweisen, wobei in diesen Bereichen die Würste beispielsweise mittels Rauchstock 18 abgenommen werden. Dazu kann ein Rauchstock 18 oder ein Rauchstockeinschub in die Schlaufen bzw. zwischen die Würste eingefahren werden, wobei die Würste dann beispielsweise durch Anheben des Rauchstocks 18 aus den Haken genommen werden können. Die Aufhängehaken 2 einer Gruppe können dabei unabhängig von den Aufhängehaken einer anderen Gruppe bewegt werden, beispielsweise gestoppt werden um die Würste zu entnehmen.

Fig. 7 zeigt eine mögliche Ausführungsform für das erfindungsgemäße Verfahren. Dabei ist hier nur ein Aufnahmebereich A gezeigt, in dem die Würste, beispielsweise durch einen Rauchstock 18, nach oben abgenommen werden können. Es wäre jedoch auch möglich, dass es mehrere Abnahmebereiche, z.B. auch auf der Rückseite der Vorrichtung gibt.

Wie zuvor beschrieben, sind für ein bestimmtes Wurstkaliber bestimmte Abstände a und g vorgegeben. Ein Aufhängehaken 2a bewegt sich dabei auf die Übergabeposition 9 zu und fädelt in eine Wurstschlaufe ein, um diese von einer Halterung, wo sie zuvor angeordnet war, aufzunehmen und abzuziehen. In diesem Bereich ist es vorteilhaft, wenn der Aufhängehaken 2a mit einer langsameren Geschwindigkeit in den Bereich der Übergabeposition 9 einfährt - im Vergleich zu einer Geschwindigkeit, in der beispielsweise Aufhängehaken in einem der Übergabeposition nachfolgenden Bereich weitertransportiert werden. Zum leichteren Aufnehmen der Produkte auf den Aufhängehaken kann vorteilhafterweise dabei der Abstand zwischen zwei benachbarten Haken 2a und 2b vergrößert sein, d.h. dass der Abstand a2 zwischen den Haken (wobei als Abstand a2 die Bahnlänge zwischen den Aufhängehaken 2a,b betrachtet wird) vor und hinter der Übergabeposition 9 größer ist als beispielsweise der Abstand a1, den die Aufhängehaken 2 dann in einem Abnahmebereich A aufweisen, und zwar wenn sie abgenommen werden. Sobald die Gruppe, die für den Abnahmebereich A vorgesehen ist, komplett auf den Aufhängehaken aufgehängt ist, können die Aufhängehaken, wie aus Fig. 7 hervorgeht, in einer Gruppe dann so weit zusammengefahren werden, dass sich die Produkte gerade nicht berühren, d.h. den Abstand a1 zueinander aufweisen. Wird der Rauchstock 18 eingefahren und angehoben, können dann die Aufhängehaken einer Gruppe auch gestoppt werden. Sobald die Würste aus dem Abnahmebereich A entnommen worden sind, werden die Aufhängehaken dieser Gruppe dann auf der Umlaufbahn in Richtung Abnahmebereich 9 zurückgefahren. Dabei kann die Geschwindigkeit hier wieder größer sein als die Geschwindigkeit im Bereich der Übergabeposition 9.

Das in Fig. 7 gezeigte Ausführungsbeispiel wurde nur mit einer Gruppe A beschrieben. Es ist jedoch möglich, dass zunächst, wie auch im Zusammenhang mit Fig. 6 beschrieben wurde, die Anzahl an Aufhängehaken einer Gruppe aufgehängt werden und auf der in Fig. 7 gezeigten Rückseite in einem entsprechenden Abnahmebereich zusammengefahren werden, um schließlich abgenommen zu werden. Während die Haken der ersten Gruppe in den Abnahmebereich (z.B. A3) transportiert werden, können schon die Haken der nachfolgenden Gruppe auf Haken aufgenommen werden. Dann ist es möglich, dass während eine erste Gruppe bereits abgenommen wird (wobei die Aufhängehaken z.B. stillstehen) Würste nachfolgender Gruppe(n) aufgehängt oder in die nachfolgenden Abnahmebereiche (A2,A1,A4) transportiert werden.

Das erfindungsgemäße Verfahren eignet sich gut für die Gruppenbestückung, bei der die verwendete Wursthülle in Ihrer Länge so abgestimmt ist, dass die produzierten Würste auf einen Rauchstock passen. Genauso gut eignet sich das Verfahren für die Endlosbestückung, d.h. eine Produktion in der die Länge der Wursthülle nicht auf die Rauchstocklänge abgestimmt ist. In jedem Fall kann ein ausreichender Abstand g zwischen den Gruppen eingestellt werden, damit der Rauchstock einfach eingefädelt werden und das Ende der Gruppe gut erkannt werden kann.

Die vorliegende Erfindung ermöglicht ein großes Maß an Verfahrensvarianten, wobei das Verfahren individuell an die einzelnen Gegebenheiten wie Wurstkaliber, Prozessgeschwindigkeit, Rauchstocklänge etc. angepasst werden kann. Wesentlich ist dabei lediglich, dass die Aufhängehaken unabhängig voneinander auf einer Umlaufbahn bewegt werden können.

## Patentansprüche

1. Verfahren zum Aufhängen von Würsten (20), wobei Würste von auf einer Umlaufbahn (3) umlaufenden Aufhängehaken (3) aufgenommen und an den Aufhängehaken (2) hängend in Transportrichtung (T) in einen Abnahmebereich (A) transportiert werden, **dadurch gekennzeichnet, dass** zumindest ein Teil der Aufhängehaken (2) unabhängig voneinander angesteuert wird, wobei zumindest ein Teil der Aufhängehaken (2) einen separaten Antrieb (7, 14) aufweist und unabhängig voneinander angetrieben wird, die Geschwindigkeit der Aufhängehaken (2) während eines Umlaufs auf der Umlaufbahn (3) variiert wird und die Aufhängevorrichtung zusätzlich eine Führungseinrichtung (4) aufweist, mit der die Aufhängehaken auf der Umlaufbahn (3) geführt werden.

2. Verfahren nach Anspruch 1 , **dadurch gekennzeichnet, dass** die Aufhängehaken (2) auf einer im wesentlichen horizontalen Umlaufbahn (3) geführt werden.

3. Verfahren nach mindestens einem der Ansprüche 1 bis 2, **dadurch gekennzeichnet, dass** die Abstände (a, g) zwischen nachfolgenden Aufhängehaken (2) auf vorbestimmte Abstände (a,g) eingestellt werden, wobei die Abstände (a,g) konstant sind oder von der Position der Aufhängehaken und/oder der Zeit abhängig sind.

4. Verfahren nach mindestens einem der Ansprüche 1 bis 3, **dadurch gekennzeichnet, dass** die Abstände a zwischen den Aufhängehaken (2) derart eingestellt werden, dass es eine bestimmte Anzahl k an Gruppen gibt, die wiederum eine bestimmte Anzahl n an Aufhängehaken (2) umfassen, wobei der Abstand a zwischen den Aufhängehaken (2) in einer Gruppe kleiner ist aus der Abstand g zwischen den Gruppen.

5. Verfahren nach mindestens einem der Ansprüche 1 bis 4, **dadurch gekennzeichnet, dass** während des Transports der Aufhängehaken die Abstände (a) der Aufhängehaken (2) innerhalb einer Gruppe variiert werden und/oder der Abstand (g) zwischen zwei Gruppen variiert wird.

6. Verfahren nach mindestens einem der Ansprüche 1 bis 5, **dadurch gekennzeichnet, dass** die Aufhängehaken (2) einer Gruppe unabhängig von einer zweiten Gruppe bewegt werden.

7. Verfahren nach mindestens einem der Ansprüche 1 bis 6, **dadurch gekennzeichnet, dass** der Abstand (a) zwischen zwei benachbarten Aufhängehaken (2) derart gesteuert wird, dass der Abstand (a2) eines Aufhängehakens (2a) zum vorauseilenden Aufhängehaken (2b) bei der Aufnahme der Würste auf einen Aufhängehaken größer ist als in einem in Transportrichtung nachfolgenden Abnahmebereich (A) bei der Abnahme der Würste und/oder die Aufhängehaken (2) bei der Aufnahme der Würste langsamer bewegt werden als in einem in Transportrichtung nachfolgenden Bereich.

8. Aufhängevorrichtung (1) insbesondere zum Durchführen des Verfahrens nach mindestens einem der Ansprüche 1 bis 7 mit auf einer Umlaufbahn (3) umlaufenden Aufhängehaken (2) zur Aufnahme von Würsten (20), **dadurch gekennzeichnet, dass** zumindest ein Teil der Aufhängehaken (2) unabhängig voneinander ansteuerbar ist, zumindest ein Teil der Aufhängehaken (2) einen separaten Antrieb (7, 14) aufweist, derart, dass die Geschwindigkeit der Aufhängehaken (2) während eines Umlaufs auf der Umlaufbahn (3) variierbar ist, wobei die Aufhängevorrichtung zusätzlich eine Führungseinrichtung (4) aufweist, mit der die Aufhängehaken auf der Umlaufbahn (3) geführt werden.

9. Aufhängevorrichtung (1) nach Anspruch 8, **dadurch gekennzeichnet, dass** zumindest ein Teil der Aufhängehaken (2) als Antrieb (7) einen eigenen Motor (7) aufweist oder ein eigenes umlaufendes Antriebselement (16) umfasst oder zumindest ein Teil der Aufhängehaken (2) durch Linearmotoren (7,14) unabhängig voneinander angetrieben werden.

10. Aufhängevorrichtung (1) nach mindestens einem der Ansprüche 8 bis 9, **dadurch gekennzeichnet, dass** die Aufhängevorrichtung (1) eine Steuerung (17) umfasst, die die Aufhängehaken (2) derart ansteuert, dass nachfolgende Aufhängehaken (2) bestimmte Abstände (a, g) zueinander aufweisen.

11. Aufhängevorrichtung (1) nach mindestens einem der Ansprüche 8 bis 10, **dadurch gekennzeichnet, dass** die Steuerung (17) derart ausgelegt ist, dass die Aufhängehaken während eines Umlaufs mit einer variierenden Geschwindigkeit bewegbar sind.

12. Aufhängevorrichtung (1) nach mindestens einem der Ansprüche 8 bis 11, **dadurch gekennzeichnet, dass** die Vorrichtung eine Positionserkennungseinrichtung (11) aufweist, die die Position der Aufhängehaken erfassen kann, wobei die Steuerung derart ausgebildet ist, dass die Aufhängehaken in Abhängigkeit der erfassten Position angesteuert werden.

13. Aufhängevorrichtung (1) nach mindestens einem der Ansprüche 8 bis 12, **dadurch gekennzeichnet, dass** die Vorrichtung eine Eingabeeinrichtung umfasst, über die insbesondere Parameter für Abstände nachfolgender Haken eingegeben werden können.

## Claims

1. A method for suspending sausages (20), comprising the steps of taking up sausages on suspension hooks (2) circulating on a circulation path (3) and conveying them, suspended from the suspension hooks (2), in a conveying direction (T) into a removal area (A), **characterized in that** at least a part of the suspension hooks (2) is controlled independently of one another, wherein at least a part of the suspension hooks (2) is provided with a separate drive (7, 14), and is driven independently of one another, the speed of the suspension hooks (2) varies during a cycle on the circulation path (3) and the suspension apparatus additionally has a guide means (4) with the aid of which the suspension hooks are guided on the circulation path (3).

2. A method according to claim 1 , **characterized in that** the suspension hooks (2) are guided on a substantially horizontal circulation path (3).

3. A method according to at least one of the claims 1 to 2, **characterized in that** the distances (*a, g*) between successive suspension hooks (2) are adjusted to predetermined distances (*a, g*), said distances (*a, g*) being constant or depending on the position of the suspension hooks and/or on time.

4. A method according to at least one of the claims 1 to 3, **characterized in that** the distances a between the suspension hooks (2) are adjusted such that there will be a specific number *k* of groups, which, in turn, comprise a specific number *n* of suspension hooks (2), the distance *a* between the suspension hooks (2) within a group being smaller than the distance *g* between the respective groups.

5. A method according to at least one of the claims 1 to 4, **characterized in that,** while the suspension hooks are being conveyed, the distances (*a*) of the suspension hooks (2) within a group are varied and/or the distance (*g*) between two groups is varied.

6. A method according to at least one of the claims 1 to 5, **characterized in that** the suspension hooks (2) of one group are moved independently of a second group.

7. A method according to at least one of the claims 1 to 6, **characterized in that** the distance (*a*) between two neighboring suspension hooks (2) is controlled such that the distance (*a2*) between a suspension hook (2a) and the suspension hook (2b) positioned ahead of said suspension hook (2a) is larger when the respective sausages are taken up on a suspension hook than it is when the sausages are removed in a removal area (A) located downstream in the conveying direction and/or that the speed of movement of the suspension hooks (2) is lower when the sausages are taken up than it is in an area located downstream in the conveying direction.

8. A suspension apparatus (1), in particular for carrying out the method according to at least one of the claims 1 to 7, comprising suspension hooks (2) circulating on a circulation path (3) and used for taking up sausages (20), **characterized in that** at least a part of the suspension hooks (2) is controllable independently of one another, at least a part of the suspension hooks (2) is provided with a separate drive (7, 14), such that the speed of the suspension hooks (2) is variable during a cycle on the circulation path (3), wherein the suspension apparatus additionally has a guide means (4) with the aid of which the suspension hooks are guided on the circulation path (3).

9. A suspension apparatus (1) according to claim 8, **characterized in that** at least a part of the suspension hooks (2) includes, as a drive (7), a motor (7) of its own or a circulating driving element (16) of its own or that at least a part of the suspension hooks (2) is driven independently of one another by means of linear motors (7, 14).

10. A suspension apparatus (1) according to at least one of the claims 8 to 9, **characterized in that** the suspension apparatus (1) comprises a control unit (17), which controls the suspension hooks (2) such that successive suspension hooks (2) are spaced apart at specific distances (*a, g*).

11. A suspension apparatus (1) according to at least one of the claims 8 to 10, **characterized in that** the control unit (17) is configured such that the suspension hooks are movable with varying speed during a cycle.

12. A suspension apparatus (1) according to at least one of the claims 8 to 11, **characterized in that** the apparatus includes a position detection system (11), which is able to detect the position of the suspension hooks, the control unit being configured such that the suspension hooks are controlled depending on the position detected.

13. A suspension apparatus (1) according to at least one of the claims 8 to 12, **characterized in that** the apparatus includes an input unit through which in particular parameters for distances between successive hooks can be inputted.

## Revendications

1. Procédé de suspension de saucisses (20), dans lequel les saucisses sont reçues par des crochets de suspension (3) tournant sur un trajet orbital (3) et sont transportées suspendues aux crochets de suspension (2) dans la direction de transport (T) dans une zone de prélèvement (A), **caractérisé en ce qu'**au moins une partie des crochets de suspension (2) est contrôlée indépendamment les uns des autres, au moins certains des crochets de suspension (2) ayant un entraînement séparé (7, 14) et étant entraînés indépendamment l'un de l'autre, la vitesse des crochets de suspension (2) étant modifiée pendant une rotation sur le trajet orbital (3), et le dispositif de suspension ayant en outre un dispositif de guidage (4) par lequel les crochets de suspension sont guidés sur le trajet orbital (3).

2. Procédé selon la revendication 1, **caractérisé en ce que** les crochets de suspension (2) sont guidés sur un trajet orbital sensiblement horizontal (3).

3. Procédé selon au moins l'une des revendications 1 à 2, **caractérisé en ce que** les distances (a, g) entre les crochets de suspension (2) suivants sont fixées à des distances prédéterminées (a, g), les distances (a, g) étant constantes ou dépendantes de la position des crochets de suspension et/ou du temps.

4. Procédé selon au moins l'une des revendications 1 à 3, **caractérisé en ce que** les distances a entre les crochets de suspension (2) sont ajustées de telle sorte qu'il y ait un certain nombre k de groupes qui comprennent eux-mêmes un certain nombre n de crochets de suspension (2), la distance a entre les crochets de suspension (2) dans un groupe est inférieure à la distance g entre les groupes.

5. Procédé selon au moins l'une des revendications 1 à 4, **caractérisé en ce que** pendant le transport des crochets de suspension, les distances (a) des crochets de suspension (2) dans un groupe sont modifiées et/ou la distance (g) entre deux groupes est modifiée.

6. Procédé selon au moins l'une des revendications 1 à 5, **caractérisé en ce que** les crochets de suspension (2) d'un groupe sont déplacés indépendamment d'un second groupe.

7. Procédé selon au moins l'une des revendications 1 à 6, **caractérisé en ce que** la distance (a) entre deux crochets de suspension adjacents (2) est réglée de telle sorte que la distance (a2) d'un crochet de suspension (2a) au crochet de suspension précédent (2b) est supérieure lorsque les saucisses sont reçues sur un crochet de suspension que dans une zone de retrait (A) suivant dans la direction du transport lorsque les saucisses sont retirées et/ou les crochets de suspension (2) sont déplacés plus lentement lorsque les saucisses sont reçues que dans une zone suivant dans la direction du transport.

8. Dispositif de suspension (1), en particulier pour la mise en oeuvre du procédé selon au moins l'une des revendications 1 à 7, comprenant des crochets de suspension (2) tournant sur un trajet orbital (3) pour recevoir des saucisses (20), **caractérisé en ce qu'**au moins certains des crochets de suspension (2) peuvent être commandés indépendamment les uns des autres, au moins certains des crochets de suspension (2) présentent un entraînement séparé (7, 14), de telle sorte que la vitesse des crochets de suspension (2) peut être modifiée pendant une rotation sur le trajet orbital (3), le dispositif de suspension comportant en outre un dispositif de guidage (4) qui guide les crochets de suspension sur le trajet orbital (3).

9. Dispositif de suspension (1) selon la revendication 8, **caractérisé en ce qu'**au moins une partie des crochets de suspension (2) possède son propre moteur (7) comme entraînement (7) ou comprend son propre élément d'entraînement rotatif (16) ou au moins une partie des crochets de suspension (2) est entraînée indépendamment les uns des autres par des moteurs linéaires (7, 14).

10. Dispositif de suspension (1) selon au moins l'une des revendications 8 à 9, **caractérisé en ce que** le dispositif de suspension (1) comprend un dispositif de commande (17) qui commande les crochets de suspension (2) de telle sorte que les crochets de suspension suivants (2) présentent certaines distances (a, g) les unes par rapport aux autres.

11. Dispositif de suspension (1) selon au moins l'une des revendications 8 à 10, **caractérisé en ce que** le système de commande (17) est conçu de telle sorte que les crochets de suspension peuvent être déplacés à une vitesse variable pendant un tour.

12. Dispositif de suspension (1) selon au moins l'une des revendications 8 à 11, **caractérisé en ce que** le dispositif présente un dispositif de reconnaissance de position (11) qui peut détecter la position des crochets de suspension, la commande étant conçue de telle sorte que les crochets de suspension sont activés en fonction de la position détectée.

13. Dispositif de suspension (1) selon au moins l'une des revendications 8 à 12, **caractérisé en ce que** le dispositif comprend un dispositif d'entrée par l'intermédiaire duquel, en particulier, des paramètres pour les distances entre crochets suivants peuvent être entrés.
